**Europäisches Patentamt**

**European Patent Office**

**Office européen des brevets**

(11) Numéro de publication: **0 125 942**
**B1**

(12) **FASCICULE DE BREVET EUROPÉEN**

(45) Date de publication du fascicule du brevet:
02.09.87

(21) Numéro de dépôt: **84400647.8**

(22) Date de dépôt: **30.03.84**

(51) Int. Cl.⁴: **B 21 D 39/04,** F 16 B 7/00,
G 02 B 6/24

(54) **Procédé de blocage mécanique d'un élément intérieur dans un corps extérieur et application de ce procédé à la réalisation d'un embout de connecteur de fibres optiques.**

(30) Priorité: **01.04.83 FR 8305422**

(43) Date de publication de la demande:
**21.11.84 Bulletin 84/47**

(45) Mention de la délivrance du brevet:
**02.09.87 Bulletin 87/36**

(84) Etats contractants désignés:
**DE GB IT SE**

(56) Documents cité:
**FR-A-2 023 650**
**FR-A-2 157 481**
**GB-A-688 923**

(73) Titulaire: **RADIALL INDUSTRIE, Société Anonyme dite:, 101, rue Philibert Hoffmann Zone Industrielle Ouest, F-93116 Rosny- Sous- Bois (FR)**

(72) Inventeur: **Cartier, Jacques, 8, avenue Foch, F-94120 Fontenay sous Bois (FR)**

(74) Mandataire: **Nony, Michel, Cabinet Nony 29, rue Cambacérès, F-75008 Paris (FR)**

EP 0 125 942 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention est relative à un procédé de blocage mécanique d'un élément intérieur dans un corps extérieur, mettant en oeuvre des pièces de blocage introduites dans des trous radiaux du corps extérieur et venant en appui contre l'élément intérieur, voir FR-A-2 157 481. Dans ce document des trous radiaux sout fermés par une matière plastique qui est fondue dans les trous.

A titre d'application particulière nullement limitative le procédé selon la présente invention est utilisable pour immobiliser une fibre optique dans un embout de connecteur, l'élément intérieur étant alors de préférence un élément cylindrique tubulaire, de préférence métallique, en particulier en acier, à l'intérieur duquel la fibre optique est immobilisée en particulier par collage, le corps extérieur étant alors un corps d'embout.

La société déposante a ainsi déjà décrit dans sa demande de brevet EP-A2-0063085 un connecteur mettant en oeuvre un tel blocage mécanique permettant d'immobiliser en position centrée une fibre optique dans un embout de connecteur.

Le connecteur décrit dans la demande antérieure, et pour lequel peut également être mis en oeuvre le procédé selon la présente invention, est du type comportant deux embouts mâles montés à l'extrémité de chacune des fibres à connecter et un raccord femelle de reconstitution comportant un perçage longitudinal pour supporter et aligner les deux embouts face à face.

Le raccord femelle comporte dans sa partie centrale, à l'intérieur de son perçage longitudinal, un corps de butée pour les embouts mâles, notamment une sphère, présentant un orifice axial traversant et, autour de celui-ci, une portée de contact en regard de chacun des embouts mâles, chacun des embouts mâles présentant une protubérance tubulaire axiale susceptible de s'engager dans l'orifice dudit corps et un conduit dans lequel la fibre optique peut être introduite avec jeu et immobilisée de manière que son extrémité coïncide avec l'extrémité de la protubérance et, entourant la partie arrière de celle-ci, un évidement annulaire dont la paroi définit une portée de contact avec la portée en regard du corps de butée du raccord femelle, sous l'action de moyens de pression longitudinaux, les portées en regard du corps de butée et de chacun des embouts mâles étant agencées de façon telle que, lors de tout mouvement relatif des portées en contact, l'extrémité d'une fibre au niveau de la face d'extrémité de la protubérance d'un élément mâle soit maintenue à une distance constante prédéterminée du centre du corps de butée.

Dans la demande de brevet EP-A2-0063085 précitée, chacun des embouts mâles comporte un corps d'embout présentant à son extrémité ledit évidement annulaire et un élément intérieur tubulaire, de préférence métallique, en particulier en acier, mis en place dans un trou axial correspondant du corps d'embout et dont l'extrémité constitue ladite protubérance des moyens de blocage mécanique étant prévus pour immobiliser l'élément intérieur tubulaire dans le corps d'embout, ces moyens de blocage comprenant de préférence une pluralité de billes montées à force dans des trous radiaux correspondants du corps d'embout et venant en appui contre l'élément intérieur tubulaire.

Comme décrit dans la demande de brevet antérieure, le réglage du corps d'embout est opéré par des micro-déplacements des billes montées à force dans les trous radiaux correspondants du corps d'embout pour amener le centre de la fibre optique sur l'axe de l'organe de butée, telle qu'une sphère percée, elle-même en appui sur la paroi, de préférence de profil conique, de l'évidement annulaire de l'embout mâle.

Les efforts de déplacement des billes sont très dépendants du serrage entre chaque bille et le trou radial dans lequel elle est engagée, ce qui conduit à des tolérances très serrées de fabrication ainsi qu'à la nécessité de très bons états de surface des billes et des trous radiaux. De plus, on n'est pas toujours assuré que les billes engagées dans les trous radiaux assurent toujours l'immobilisation définitive de l'élément interieur tubulaire par rapport au corps d'embout.

Le positionnement axial de la fibre doit dans la pratique être précis à moins de 2 micromètres de telle sorte que le déplacement des billes doit être effectué avec au moins la même précision.

Le présente invention se propose de réaliser un procédé permettant d'assurer un blocage mécanique d'un élément intérieur, notamment cylindrique, tubulaire, dans un corps extérieur notamment tubulaire qui soit d'une mise en oeuvre simple et rapide et qui évite en particulier des usinages précis et compliqués des pièces concernées.

Le procédé selon l'invention se caractérise par les caractéristiques de la revendication 1.

De préférence il est prévu quatre trous radiaux équiangulairement répartis en forme de croix.

Les pièces en matière déformable, notamment sous forme de billes ou de cylindres, sont avantageusement réalisées en un métal mou tel que le plomb, l'étain ou un alliage d'étain-plomb, étant entendu que l'on peut utiliser toute matière malléable et notamment toute autre alliage malléable déformable sous une faible contrainte.

De préférence selon l'invention on réalise sur la périphérie de l'élément intérieur dans la zone des trous radiaux au moins une gorge, et de préférence deux gorges adjacentes de profil concave.

Le procédé qui vient d'être décrit peut avantageusement être utilisé pour la mise en place d'une fibre optique dans un embout de connecteur comportant un élément tubulaire cylindrique qui constitue l'élément intérieur décrit ci-dessus celui-ci étant mis en place dans un corps d'embout tubulaire qui constitue le corps extérieur décrit ci-dessus. On met en oeuvre le procédé selon l'invention pour former, entre l'élément intérieur et le corps d'embout, par déformation des pièces en matière déformable un noyau de matière déformée assurant la retenue de l'élément intérieur, on immobilise ensuite, de préférence par collage d'extrémité, une fibre optique dans l'élément intérieur par action de poinçons engagés successivement dans les trous radiaux du corps d'embout, on réalise des microdéplacements de l'élément intérieur en vue du réglage, notamment du positionnement axial et du centrage de la fibre dans son embout pour la réalisation d'un connecteur.

Dans le but de mieux faire comprendre l'invention on va maintenant en décrire à titre d'exemple nullement limitatif un mode de mise en oeuvre pour la réalisation d'un connecteur pour fibres optiques, en se référant au dessin annexé dans lequel:

- la figure 1 est une vue partiellement en coupe illustrant la mise en oeuvre du procédé selon l'invention pour la mise en place d'un élément intérieur tubulaire dans un corps d'embout de connecteur.

- la figure 1a illustre une variante de pièce déformable utilisable pour la mise en oeuvre du procédé de l'invention,

- la figure 2 est une vue correspondant à la figure 1 après mise en oeuvre du procédé de l'invention,

- la figure 3 est une vue en coupe selon III-III de la figure 2,

- la figure 4 illustre un calibre utilisable dans une phase de préparation de l'embout,

- la figure 5 illustre la phase de centrage d'une fibre dans un embout mâle utilisant une lunette auto-collimatrice,

- la figure 6 représente partiellement en coupe un connecteur pour fibres optiques réalisé en mettant en oeuvre le procédé de l'invention,

- la figure 7 est une vue en coupe d'un embout mâle du connecteur de la figure 4, et

- la figure 8 est une vue en coupe selon VIII-VIII de la figure 7.

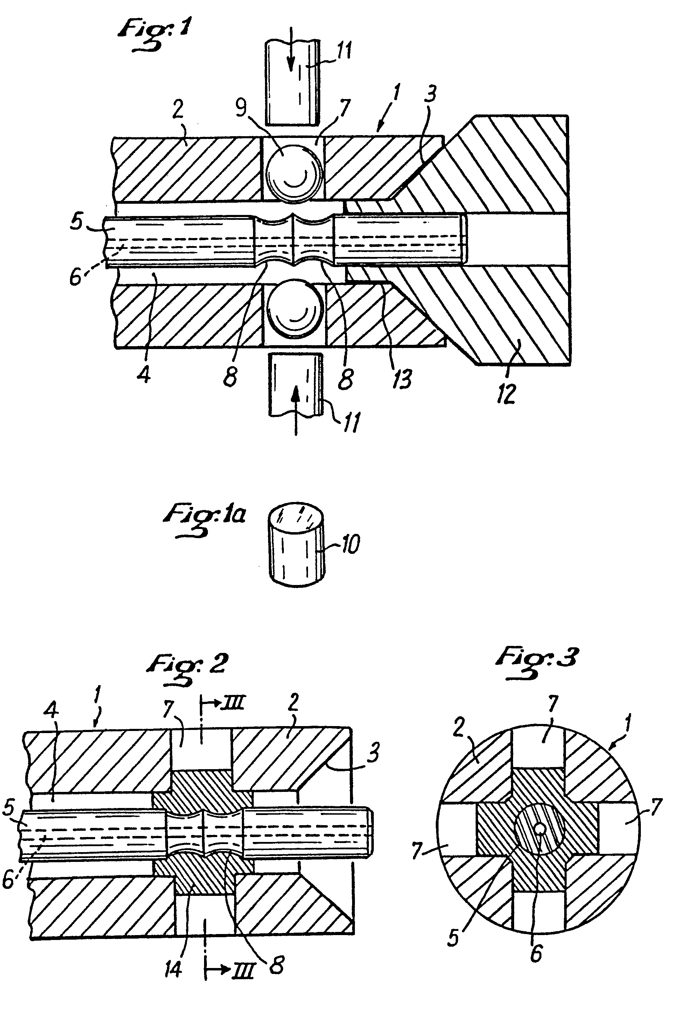

On a illustré aux figures 1 à 3 la mise en oeuvre du procédé selon l'invention appliqué à la réalisation d'un embout mâle de connecteur.

L'embout 1 présente un corps 2 dont l'extrémité comporte un évidement annulaire présentant une paroi de cavité de forme conique 3.

Le corps 2 comporte un trou longitudinal axial 4 à l'intérieur duquel est mis en place un élément cylindrique tubulaire métallique 5 comportant un conduit axial 6 à l'intérieur duquel il sera mis en place une fibre optique.

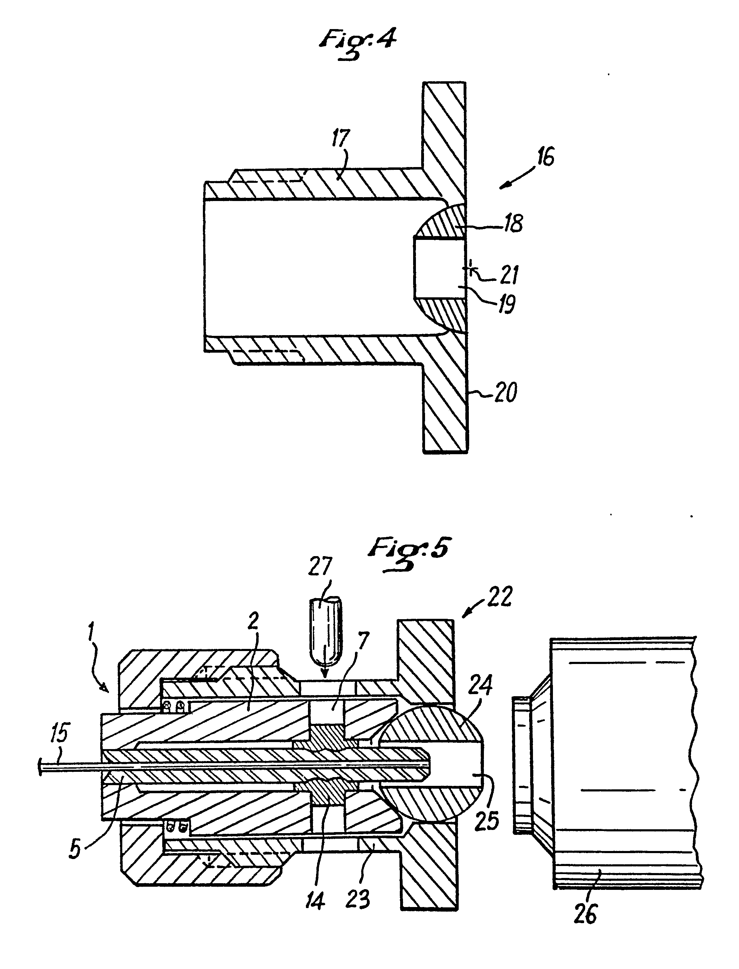

Le corps d'embout 2 présente une pluralité de trous radiaux 7, au nombre de quatre dans l'exemple représenté, les trous étant disposés en croix comme on le voit le mieux sur la figure 3.

L'élément intérieur tubulaire 5 comporte en outre deux gorges concaves adjacentes 8 dans sa périphérie extérieure.

Pour la mise en oeuvre du procédé selon l'invention on engage dans les trous radiaux 7 des pièces déformables telles que des billes 9 (figure 1) ou des pions cylindriques 10 (figure 1a), ces pièces étant réalisées en un métal mou, dans l'exemple illustré en étain.

On comprime et déforme ces pièces 9, et respectivement 10 dans la zone des gorges 8 de l'élément 5 en engageant simultanément des poinçons 11 dans les trous radiaux 7 dans le sens matérialisé par les flèches sur la figure 1. Le fluage de la matière constituant les pièces 9, et respectivement 10, est limité par l'engagement d'une bague 12 comportant une extrémité tubulaire 13 et assurant simultanément un précentrage de l'élément 5 dans le corps d'embout 2. On a illustré à la figure 2 l'embout après mise en oeuvre du procédé de blocage mécanique selon l'invention.

On voit que, par déformation des pièces 9 et respectivement 10, sous l'action des poinçons 11 il s'est formé un noyau de matière 14 dont une partie est engagée dans l'espace entre l'élément 5 et le corps 2 dans et au voisinage de la zone des gorges 8, une partie du noyau 14 débordant dans les trous radiaux 7. On assure ainsi une très bonne retenue mécanique de l'élément 5 dans le corps 2. On comprend que les trous radiaux 7 peuvent avoir des tolérances de fabrication très importantes, par exemple d'environ 0,1 mm, de même que les pièces 9 et respectivement 10 destinées à être introduites dans ces trous radiaux.

Il doit être clair que les gorges 8 prévues dans la paroi périphérique de l'élément 5 ne sont qu'une mesure facultative favorisant néanmoins le déplacement de la matière constituant les pièces 9 ou 10 lors de leur déformation par les poinçons 11.

Pour la réalisation d'un connecteur, après avoir mis en oeuvre sur chacun des embouts mâles le procédé selon l'invention, on met en place dans le conduit axial de chaque élément 5 une fibre optique 15 que l'on immobilise par collage à l'extrémité du conduit axial puis on procède à une étape de positionnement axial de la fibre dans chacun des embouts mâles. On utilise pour cela, comme d'ailleurs expliqué dans la demande antérieure, un calibre tel que celui représenté à la figure 4.

Ce calibre globalement désigné par 16 comporte un corps 17 analogue à un demi raccord femelle et un corps de butée, dans le cas présent une demi-sphère 18 munie d'un perçage longitudinal 19 et dressée dans un plan 20 en retrait de quelques micromètres, par exemple de l'ordre de 3 à 4 micromètres, par rapport à son centre 21.

Après mise en place de l'embout dans le calibre 16 et polissage contre une surface abrasive, on obtient un positionnement axial de la fibre dans l'embout mâle.

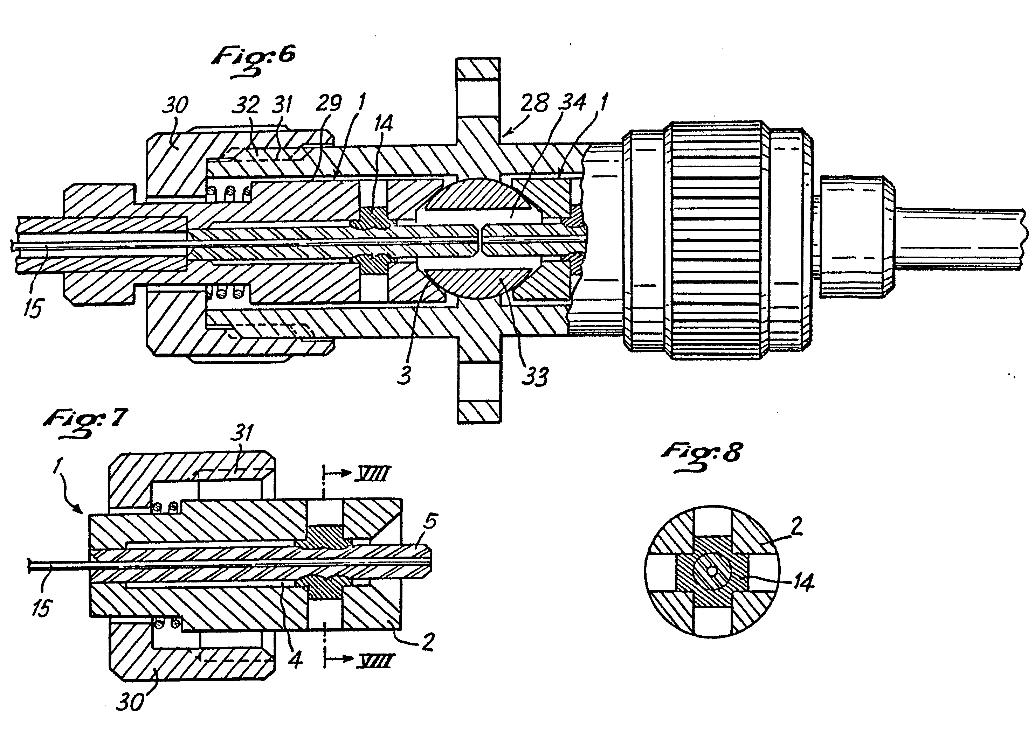

Pour effectuer ensuite le centrage de la fibre dans l'embout mâle, on utilise un calibre tel qu'illustré à la figure 5, designé globalement par 22 et comportant un corps 23 reproduisant les caractéristiques d'un demi-raccord femelle et une sphère 24 munie d'un perçage longitudinal 25, l'embout monté dans le calibre, comme illustré dans la figure 5, étant placé devant l'objectif d'une lunette autocollimatrice 26.

Le principe général d'une telle phase de centrage a déjà été décrit dans la demande de brevet EP-A2-00 63085 et n'a pas besoin d'être décrit en détail ici.

Il convient simplement d'indiquer que pour corriger la position de la fibre 15 contenue dans l'élément tubulaire 5 par rapport au centre de la sphère 24, on agit à l'aide d'un poinçon 27 introduit dans un des trous radiaux 7 sur le noyau de matière 14 retenant l'élément 5 dans le corps 2. Du fait de ls nature malléable de la matière constituant le noyau 14, on comprend que l'enfoncement du poinçon provoque un déplacement de matière du noyau 14 qui dans son fluage engendre dans la même direction que le poinçon un déplacement de l'élément 5 par rapport au corps d'embout 2.

On répète cette opération d'enfoncement de poinçon dans un ou plusieurs autres trous radiaux 7 jusqu'à amener la fibre en position parfaitement centrée par rapport à la sphère.

On comprend que bien que l'on ait assuré par la mise en oeuvre du procédé selon l'invention une bonne retenue de l'élément tubulaire intérieur dans le corps d'embout, la nature de la matière utilisée pour cette retenue permet comme cela vient d'être expliqué des réglages micrométriques ultérieurs.

L'effort nécessaire pour effectuer ces réglage est indépendant des tolérances géométriques de fabrication des composants et dépend principalement de la dureté de la matière des pièces 9, et respectivement 10, utilisées ainsi que de la forme du poinçon 27 dont l'extrémité peut être arrondie comme illustré à la figure 5.

On assure ainsi une démultiplication, dans un rapport pouvant être compris entre 2 et 5 entre le déplacement du poinçom 27 et le déplacement de l'élément intérieur 5. Ainsi pour une même précision de positionnement de la fibre, par exemple de deux micromètres, la précision de déplacement du poinçon sera de deux à cinq fois plus grande soit de quatre à dix micromètres.

On a illustré à la figure 6 un connecteur, utilisant deux embouts mâles illustrés aux figures 7 et 8, réalisés de la manière décrite précédemment, les caractéristiques du connecteur étant pour l'ensemble similaires à celles du connecteur décrit dans la demande de brevet EP-A2-00 63085.

Le comnecteur illustré à la figure 6 comprend de manière générale comme celui décrit dans la demande de brevet antérieure, deux embouts mâles 1 disposés dans un raccord femelle de reconstitution 28.

Les embouts mâles sont disposés dans un perçage longitudinal 29 du raccord femelle et ils sont verrouillés à l'aide de bagues 30 dont les filetages 31 coopèrent avec des filetages correspondants 32 des extrémités du raccord femelle 28.

Dans le perçage longitudinal 29 du raccord femelle, dans la zone centrale de celui-ci, est mise en place une sphère 33 munie d'un orifice axial traversant 34.

Chacun des embouts mâles présente comme mentionné précédemment un corps 2 comportant un trou axial 4 dans lequel un élément tubulaire 5 a été mis en place comme expliqué précédemment, la retenue s'effectuant par le noyau de matière 14.

## Revendications

1. Procédé de blocage mécanique d'un élément intérieur dans un corps extérieur mettant en oeuvre des pièces de blocage introduites dans des trous radiaux du corps extérieur et venant en appui contre l'élément intérieur, caractérisé par le fait que l'on met en place l'élément intérieur (5) dans le corps extérieur (2), que l'on introduit par une extrémité dudit corps une bague (12) s'engageant autour de l'élément intérieur, que l'on engage dans les trous radiaux (7) du corps extérieur des pièces déformables (9, 10) en un métal mou, puis l'on comprime et déforme lesdites pièces en engageant des poinçons (11) dans les trous radiaux (7) de façon à remplir l'espace libre existant dans la zone des trous radiaux entre la périphérie de l'élément intérieur et la paroi en ragard du corps extérieur, ladite bague étant maintenue en position pendant les phases de mise en place des pièces déformables (9, 10) et leur compression, la face frontale de ladite bague réalisant un appui pour la matière déformée (14).

2. Procédé selon la revendication 1, caractérisé par le fait que le corps extérieur (2) est tubulaire, l'élément intérieur (5) étant introduit dans un trou axial (4) dudit corps.

3. Procédé selon l'une quelconque des revendications 1 et 2, caractérisé par le fait que l'élément intérieur (5) est cylindrique.

4. Procédé selon la revendication 3, caractérisé par le fait que l'élément intérieur (5) est tubulaire et comporte un conduit axial (6).

5. Procédé selon l'une quelconque des revendications précédentes, caractérisé par le fait que les pièces déformables ont la forme de billes (9).

6. Procédé selon l'une quelconque des revendications 1 à 4, caractérisé par le fait que les pièces déformables ont la forme de cylindres (10).

7. Procédé selon l'une quelconque des revendications précédentes, caractérisé par le fait que lesdites pièces déformables sont réalisées en un métal mou tel que le plomb, l'étain ou un alliage d'étain-plomb.

8. Procédé selon l'une quelconque des revendications précédentes, caractérisé par le fait que l'on réalise au préalable sur la périphérie de l'élément intérieur, dans la zone des trous radiaux, au moins une gorge (8), et de préférence deux gorges adjacentes, de profil concave.

9. Procédé de réalisation d'un embout de connecteur du type comportant un corps d'embout muni de trous radiaux et un élément intérieur apte à recevoir une fibre optique, caractérisé par le fait qu'après avoir mis en place un élément intérieur (5) comportant un conduit axial (6) dans le corps d'embout, on forme, par la mise en oeuvre du procédé selon l'une quelconque des revendications précédentes, entre l'élément intérieur et le corps d'embout un noyau de matière déformée (14) assurant la retenue de l'élément intérieur, on met en place dans l'élément intérieur (5) une fibre optique (15) que l'on immobilise, de préférence par collage, dans le conduit axial (6) dudit élément intérieur, et que l'on effectue, par action de poinçons (27) engagés dans les trous radiaux (7) du corps d'embout (2), des microdéplacements de l'élément intérieur par rapport au corps d'embout, pour centrer ledit élément intérieur dans ledit corps d'embout.

**Patentansprüche**

1. Verfahren zum mechanischen Blockieren eines Innenelementes in einem äußeren Körper, bei dem Blockierungsteile verwendet werden, die in Radiallöcher des äußeren Körpers eingeführt werden und in Anlage an das Innenelement kommen, dadurch gekennzeichnet, daß man das Innenelement (5) in den äußeren Körper (2) einbringt, daß man durch ein Ende dieses Körpers einen Ring (12) einführt, der sich um das Innenelement herum legt, daß in die Radiallöcher (7) des äußeren Körpers deformierbare Teile (9, 10) aus einem Weichmetall eingesetzt werden, daß daraufhin diese deformierbaren Teile zusammengedrückt und verformt werden, indem Stauchstempel (11) in die Radiallöcher (7) derart eingeführt werden, daß Freiräume gefüllt werden, die in der Zone der Radiallöcher zwischen dem Umfang des Innenelementes und der gegenüberliegenden Wandung des äußeren Körpers vorhanden sind, und daß der genannte Ring während der Abeitsgänge des Einsetzens der deformierbaren Teile (9, 10) und deren Zusammenstauchung in Position gehalten wird, wobei die frontale Fläche des Ringes einen Anschlag für das deformierbare Material bildet.

2. Verfahren nach Anspruch 1, dadurch gekennzeichnet, daß der äußere Körper (2) rohrförmig ist und daß das Innenelement (5) in ein Axialloch (4) dieses Körpers eingeführt wird.

3. Verfahren nach Anspruch 1 oder 2, dadurch gekennzeichnet, daß ein zylindrisches Innenelement (5) verwendet wird.

4. Verfahren nach Anspruch 3, dadurch gekennzeichnet, daß das Innenelement (5) rohrförmig ist und einen axialen Durchlaß (6) aufweist.

5. Verfahren nach einem der vorhergehenden Ansprüche, dadurch gekennzeichnet, daß die deformierbaren Teile die Form von Kugeln (9) haben.

6. Verfahren nach einem der Ansprüche 1 bis 4, dadurch gekennzeichnet, daß die deformierbaren Teile die Form von Zylindern (10) haben.

7. Varfahren nach einem der vorhergehenden Ansprüche, dadurch gekennzeichnet, daß die deformierbaren Teile aus einem Weichmetall wie beispielsweise Blei, Zinn oder einer Blei-Zinn-Legierung gefertigt sind.

8. Verfahran nach einem der vorhergehenden Ansprüche, dadurch gekennzeichnet, daß zunächst an der Peripherie des Innenelements und in der Zone der Radiallöcher mindestens eine Kerbe (8) und vorzugsweise zwei benachbarte Kerben, mit konkavem Profil ausgeführt werden.

9. Verfahren zur Herstellung eines Steckverbinders mit einem äußeren Steckerkörper, der Radiallöcher und ein Innenelement aufweist, das einen optischen Lichtleiter aufnehmen kann, dadurch gekennzeichnet, daß nach Einsetzen des Innenelementes (5), das einen axialen Durchlaß (6) aufweist, unter Verwendung des Verfahrens nach einem beliebigen der vorhergehenden Ansprüche zwischen dem Innenelement und dem äußeren Steckerkörper ein Kern aus deformiertem Material (14) geformt wird, der den Halt des Innenelements sichert, daß man in das Innenelement einen optischen Lichtleiter (15) einsetzt und diesen, vorzugsweise durch Kleben, in dem axialen Durchlaß (6) des Innenelements festlegt, und daß man durch Einsatz der Stauchstempel (27), die in die Radiallöcher (7) des Steckerkörpers (2) eingesetzt werden, kleinste Verschiebungen (Mikroverschiebungen) des Innenelements gegenüber dem äußeren Steckerkörper durchführt.

**Claims**

1. A method or mechanical locking of an inner member into an outer body, which makes use of locking pieces introduced into radial holes in the outer body and bearing against the inner member, characterized by the fact that the inner member (5) is put in place in the outer body (2), that through one and of the said body a ring (12) is introduced to engage round the inner member, that in the radial holes (7) in the outer body deformable pieces (9, 10) of a soft metal are engaged and then the said pieces are compressed and deformed by engaging punches (11) in the radial holes (7) so as to fill the free space existing in the zone of the radial holes between the periphery of the inner member and the well of the outer body facing it, the said ring being held in position during the phases of putting the deformable pieces (9, 10) in place and compressing them, the front face of the said ring effecting a bearing for the deformed matter (14).

2. A method as in Claim 1, characterized by the fact that the outer body (2) is tubular, the inner member (5) being introduced into an axial hole (4) in the said body.

3. A method as in either of the Claims 1 and 2, characterized by the fact that the inner member (5) is cylindrical.

4. A method as in Claim 3, characterized by the fact that the inner member (5) is tubular and includes an axial duct (6).

5. A method as in any one of the preceding Claims, characterized by the fact that the deformable pieces have the shape of balls (9).

6. A method as in any one of the Claims 1 to 4, characterized by the fact that the deformable pieces have the shape of cylinders (10).

7. A method as in any one of the preceding Claims, characterized by the fact that the said deformable pieces are produced from a soft metal such as lead, tin or a tin-lead alloy.

8. A method as in any one of the preceding Claims, characterized by the fact that beforehand on the periphery of the inner member in the zone of the radial holes at least one neck (8) is effected, and preferably two adjacent necks, of concave profile.

9. A method of production of a connector ferrule of the type which includes a ferrule body equipped with radial holes and an inner member suitable for receiving an optical fibre, characterized by the fact that after having put in place in the ferrule body an inner member (5) which includes an axial duct (6) one forms by putting into effect the method as in any one of the preceding Claims, between the inner member and the ferrule body a plug of deformed matter (14) which ensures the retention of the inner member, that in the inner member (5) an optical fibre (15) ia put in place, which preferably by gluing is fixed in the axial duct (6) in the said inner member, and that by the action of punches (27) engaged in the radial holes (7) in the ferrule body (2), microdisplacements of the inner member with respect to the ferrule body are effected in order to centre the said inner member in the said ferrule body.

0 125 942

Fig. 1

Fig. 1a

Fig. 2

Fig. 3

*Fig:4*

*Fig:5*

Fig. 6

Fig. 8

Fig. 7